# EUROPEAN PATENT APPLICATION

(11) **EP 3 508 431 A1**
(43) Date of publication of application: **10.07.2019**
(21) Application number: 17846363.4
(22) Date of filing: 25.08.2017
(51) Int. Cl.: B65B 25/00, B25J 15/08, B65G 47/90

(54) **FOOD HOLDING DEVICE**

(30) Priority: 30.08.2016 JP 2016168245
(71) Applicant: Kawasaki Jukogyo Kabushiki Kaisha, Kobe-shi, Hyogo 650-8670 (JP)
(72) Inventor: BANDO, Kenji, Hyogo 650-8670 (JP); HIRATA, Kazunori, Hyogo 650-8670 (JP)
(74) Representative: Witte, Weller & Partner Patentanwälte mbB
(86) International application number: PCT/JP2017/030608
(87) International publication number: WO 2018/043358

(57) **Abstract**

A holding device for foods is configured to hold the foods that are self-standable and have a front surface and a rear surface parallel to the front surface. The device includes a first holding part configured to hold the foods lined up in a first direction in a standing state where the front surfaces face in the first direction. The first holding part includes a first support member configured to support the foods at one of the front surface of the food located at a front end when seen in the first direction and the rear surface of the food 40 located at a tail end when seen in the first direction, and a pair of holding members configured to pinch the foods from both sides in the first direction.

## Description

### TECHNICAL FIELD

The present disclosure relates to a holding device for food.

### BACKGROUND ART

Conventionally, devices which pack food into a container, such as a tray (see Patent Documents 1 to 3) are known. A container packing device for food disclosed in Patent Document 1 lowers foods in a given posture from a conveyor onto a conveying part, and sequentially pack the foods into a container so that the foods are stacked side by side while maintaining a standing posture. This container packing device for food can pack food, such as rice balls and sandwiches, into the container. Such food is easy to be deformed and, once the food is deformed by an external force, it will not resume its original shape even if the external force is removed. Thus, if the food is deformed by the external force when the food falls, the commodity value of food will be reduced by the deformation. As a result, a rate of nonconforming products may increase to reduce the efficiency of work.

Patent Documents 2 and 3 disclose box packing devices which pack a plurality of foods while holding the foods. The box packing device disclosed in Patent Document 2 sucks and holds foods (cucumbers) at a front row and a rear row arrayed in two line-up trays by suction pads, respectively, and supports the foods (cucumbers) in a posture in which rear ends of the foods incline slightly downward. The device then packs the foods (cucumbers) at the front row and the foods (cucumbers) at the rear row sucked and held by the respective suction pads so that they are overlapped with each other at their longitudinal end parts. The box packing device disclosed in Patent Document 3 lifts a plurality of foods (rice balls) by a suction unit, moves the lifted foods above a given packing position and lowers the foods, and stops the suction to pack the foods in a box.

### [Reference Documents of Conventional Art]

### [Patent Documents]

[Patent Document 1] JP 1994-024408A
[Patent Document 2] JP1994-071404U
[Patent Document 3] JP2011-251702A

### DESCRIPTION OF THE DISCLOSURE

### [Problems to be Solved by the Disclosure]

However, the box packing device of Patent Document 2 is capable of holding only two foods (cucumbers) at once. Thus, if this box packing device is used for packing foods, such as rice balls and sandwiches, into a container, the productivity may be lowered.

Moreover, although the box packing device of Patent Document 3 can hold a plurality of (six) foods (rice balls) at once, since it holds the foods stacked side by side, there is a problem that a large workspace is needed to perform the packing work of the foods.

The present disclosure is made in view of addressing the above problems, and one purpose thereof is to increase an efficiency of a packing work of foods within a limited workspace.

### [Summary of the Disclosure]

In order to achieve the purpose, a holding device for foods according to one aspect of the present disclosure is a device configured to hold the foods that are self-standable and have a front surface and a rear surface parallel to the front surface. The device includes a first holding part configured to hold the foods lined up in a first direction in a standing state where the front surfaces face in the first direction, the first holding part including a first support member configured to support the foods at one of the front surface of the food located at a front end when seen in the first direction and the rear surface of the food located at a tail end when seen in the first direction, and a pair of holding members configured to pinch the foods from both sides in the first direction.

According to the structure, the first holding part pinches, from both sides, the foods lined up in the first direction in the standing state where the front surfaces face in the first direction while supporting the foods at the front surface of the food located at the front end or the rear surface of the food located at a tail end, and thus, the foods can be collectively held. Accordingly, an efficiency of a packing work of the foods can be improved within a limited workspace. Note that, the term "self-standable" means that the food is able to stably stand still in a state where the mutually-parallel front surface and rear surface are oriented in the vertical directions. Moreover, regarding the front surface and the rear surface of the food being oriented in the vertical directions or mutually parallel, the phrase is intended not to limit them to the exactly vertical directions or mutually parallel, but to permit a slight inclination caused by the surface of the food or wrapping of the food.

The holding device for foods may further include a base, a first robotic arm movable with respect to the base and having the first holding part at a tip end thereof, and a first control part configured to control the first robotic arm. The first control part may control the first robotic arm to cause the first support member to support the foods at one of the front surface of the food located at the front end when seen in the first direction and the rear surface of the food located at the tail end, move the pair of holding members in the first direction so that the both sides of the foods are aligned in the first direction, and cause the pair of holding members to pinch from both sides the foods aligned in the first direction.

According to the structure, by controlling the first robotic arm, the foods are supported by the first support member at one of the front surface of the food located at the front end when seen in the first direction and the rear surface of the food located at the tail end. In this state, the pair of holding members move in the first direction. As a result, the both sides of the foods can be aligned in the first direction. Thus, it becomes easier to collectively hold the foods.

The holding device for foods may further include a second support member provided at one of a front surface side of the food located at the front end when seen in the first direction and a rear surface side of the food located at the tail end. The first control part may control the first robotic arm to cause the first support member to support the foods at one of the rear surface of the food located at the tail end when seen in the first direction and the front surface of the food located at the front end, move the pair of holding members toward the second support member in the first direction so that the both sides of the foods are aligned in the first direction, cause the second support member to support the food at one of the front surface of the food located at the front end when seen in the first direction and the rear surface of the food located at the tail end, and cause the pair of holding members to pinch from the both sides the foods aligned in the first direction.

According to the structure, by controlling the first robotic arm, the foods are supported by the first support member at the rear surface of the food located at the tail end when seen in the first direction. In this state, the pair of holding members move in the first direction toward the second support member. By the second support member provided at the front side of the food located at the front end when seen in the first direction, the foods are supported at the front surface side of the food located at the front end. As a result, gaps between the foods held are eliminated, while aligning the both sides of the foods in the first direction. Thus, the foods can be held reliably.

The holding device for foods may further include a second holding part configured to hold the foods in the standing state where the front surfaces face in the first direction, a second robotic arm movable with respect to the base and having the second holding part at a tip end thereof, and a second control part configured to control the second robotic arm. The second control part may control the second robotic arm to cause the second holding part to hold the foods in the standing state where the front surfaces face in the first direction, and change the position of the foods held so that the foods are lined up in the first direction in the standing state where the front surfaces of the foods face in the first direction.

According to the structure, by controlling the second robotic arm, the foods in the standing state where the front surfaces face in the first direction are held. The held foods are lined up in the first direction in the standing state where the front surfaces of the foods face in the first direction. Thus, it becomes easier to hold the foods by the first holding part.

The holding device for foods may further include a second robotic arm movable with respect to the base and having the first holding part at a tip end thereof, and a second control part configured to control the second robotic arm. The first and second control parts may control the first and second robotic arms to cause the first support member of the first robotic arm to support the foods at the rear surface of the food located at the tail end when seen in the first direction, cause the first support member of the second robotic arm to support the foods at the front surface of the food located at the front end when seen in the first direction, move the pair of holding members of the first robotic arm toward the first support member of the second robotic arm in the first direction so that both sides of the foods are aligned in the first direction, move the pair of holding members of the second robotic arm toward the first support member of the first robotic arm in the first direction so that both sides of the foods are aligned in the first direction, and cause the pairs of holding members of the first and second robotic arms to pinch from both sides the foods aligned in the first direction.

According to the structure, by the first support member of the first robotic arm, the foods are supported at the rear surface of the food located at the tail end when seen in the first direction. On the other hand, by the first support member of the second robotic arm, the foods are supported at the front surface of the food located at the front end when seen in the first direction. Further, by the pair of holding members of the first robotic arm moving in the first direction toward the first support member of the second robotic arm, the both sides of the foods are aligned in the first direction. On the other hand, by the pair of holding members of the second robotic arm moving in the first direction toward the first support member of the first robotic arm, the both sides of the foods are aligned in the first direction. Further, by the pairs of holding members of the first and second robotic arms, the foods aligned in the first direction are held at the both sides. Thus, for example, at tip ends of left and right robotic arms of a dual-arm robot, both sides of foods can be aligned in the first direction, while the both ends of the foods are supported. It becomes easier to collectively hold a larger number of foods.

Each of the holding members may have a contact surface of a shape conforming to an inclination of a side surface of the foods and configured to contact the foods, and the contact surface may be elastically deformable.

According to the structure, since the contact surface which contacts the foods is elastically deformed, the foods are easier to be held.

### [Effect of the Disclosure]

The present disclosure has the structure described above and has the effect of increasing the efficiency of the packing work of the foods within the limited workspace.

### BRIEF DESCRIPTION OF DRAWINGS

Fig. 1 is a plan view schematically illustrating the entire structure of a holding device for foods according to a first embodiment of the present disclosure.
Fig. 2 is a perspective view schematically illustrating the foods in Fig. 1.
Fig. 3 is a front view schematically illustrating the entire structure of one example of a robot in Fig. 1.
Figs. 4(A) and 4(B) are views illustrating a structure of a right hand part (second holding part) in Fig. 3.
Figs. 5(A) and 5(B) are views illustrating a structure of a left hand part (first holding part) in Fig. 3.
Fig. 6 is a functional block diagram schematically illustrating a configuration of a control device of the robot in Fig. 3.
Fig. 7 is a front view illustrating operation of the right hand part in Fig. 4.
Figs. 8(A) and 8(B) are front views illustrating operation of the left hand part in Fig. 5.
Fig. 9 is a perspective view schematically illustrating a state where a plurality of foods are held from both sides.
Fig. 10 is a perspective view schematically illustrating a state where the held foods are packed into a tray.
Fig. 11 is a front view illustrating a structure of a right hand part (second holding part) and a left hand part (first holding part) according to a second embodiment of the present disclosure.
Figs. 12(A) and 12(B) are views illustrating operation of the right hand part and the left hand part in Fig. 11.
Fig. 13 is a perspective view schematically illustrating a state where the plurality of foods are held from both sides.
Fig. 14 is a perspective view schematically illustrating a state where the held foods are packed into the tray.
Fig. 15(A) to 15(I) are side views illustrating modifications of a holding member.

### MODES FOR CARRYING OUT THE DISCLOSURE

Hereinafter, desirable embodiments will be described with reference to the drawings. Note that, in the following, the same or corresponding elements are denoted by the same reference characters throughout the drawings to omit redundant description. Moreover, the drawings are to illustrate each element schematically in order to facilitate understandings. Further, directions in which a pair of arms are extended is referred to as the "left-and-right directions," directions parallel to an axial center of a base shaft is referred to as the "up-and-down directions," and directions perpendicular to the left-and-right directions and the up-and-down directions is referred to as the "front-and-rear directions." Moreover, a first direction is in agreement with the left direction, and a second direction is in agreement with the rear direction.

### (First Embodiment)

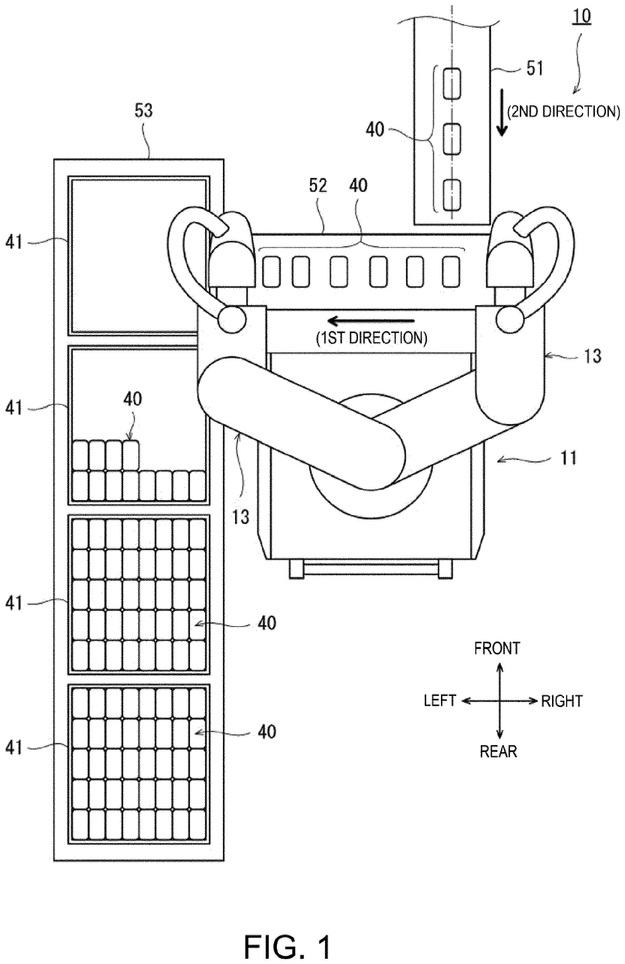

Fig. 1 is a plan view schematically illustrating the entire structure of a holding device 10 for foods 40 according to a first embodiment of the present disclosure. As illustrated in Fig. 1, the holding device 10 for the foods 40 is used for a packing work of a plurality of foods 40 into a tray 41. In this embodiment, a case where the holding device 10 for the foods 40 according to the present disclosure is comprised of a robot 11 will be described. The robot 11 includes a pair of robotic arms 13. Note that the holding device 10 for the foods 40 is not limited to the case where it is comprised of the robot 11. Note that, although a case where the robot 11 is a horizontal articulated dual-arm robot will be described, a horizontal articulated or a vertical articulated single-arm robot may be adopted. The robot 11 may be installed in a limited space (e.g., 610 mm x 620 mm) corresponding to one person.

A first belt conveyor 51 is disposed at a front right location from the robot 11. A second belt conveyor 52 is disposed in front of the robot 11. A third belt conveyor 53 is disposed at the left side of the robot 11. The first belt conveyor 51 is a device which transfers the foods 40 from a right forward location of the robot 11 to the front right location (in the second direction). The first belt conveyor 51 extends in the front-and-rear directions. The second belt conveyor 52 is a device which transfers foods 40 from the front right location of the robot 11 to the front left location (in the first direction). The second belt conveyor 52 extends in the left-and-right directions. The third belt conveyor 53 is a device which transfers the tray 41 from the left side location of the robot 11 toward the rear left. The third belt conveyor 53 extends in the front-and-rear directions. In this example, although the tray 41 is a container which can accommodate 40 pieces (eight columns x five rows) of the foods 40, the storage capacity of the tray 41 is not limited to this example. Moreover, the container may be other containers, which open upwardly.

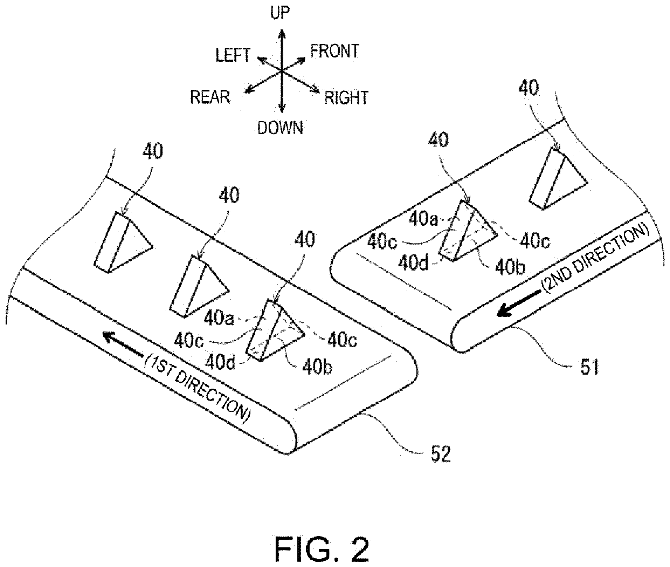

Each food 40 is a food product having a fixed shape. For example, the food 40 may be a rice ball or a sandwich. Fig. 2 is a perspective view schematically illustrating the food 40 in Fig. 1. As illustrated in Fig. 2, the food 40 is self-standable, and has a front surface 40a, and a rear surface 40b parallel to the front surface 40a. Note that the term "self-standable" means that the food 40 is able to stably stand still in a state where the mutually-parallel front surface 40a and rear surface 40b are oriented in the vertical directions. Moreover, regarding the front surface 40a and the rear surface 40b of the food 40 being oriented in the vertical directions or mutually parallel, the phrase is intended not to limit them to the exactly vertical directions or mutually parallel, but to permit a slight inclination caused by the surface of the food 40 or wrapping of the food 40. In this embodiment, a triangular rice ball wrapped with a film is used as the food 40. Normally, although the film-wrapped rice ball has a film portion projected from an upper part for easier opening of the film, the film upper part is not illustrated here. An outer surface of the food 40 has two triangular planes (the front surface 40a and the rear surface 40b) and three rectangular planes (side surfaces 40c on both sides, and a bottom surface 40d). In this embodiment, the foods 40 are each conveyed on the first belt conveyor 51, in the standing state where the front surface 40a faces in the first direction and in a state where the foods 40 are lined up in the second direction perpendicular in the first direction. The foods 40 are each conveyed on the second belt conveyor 52, in the standing state where the front surface 40a faces in the first direction and in a state where the foods 40 are lined up in the first direction.

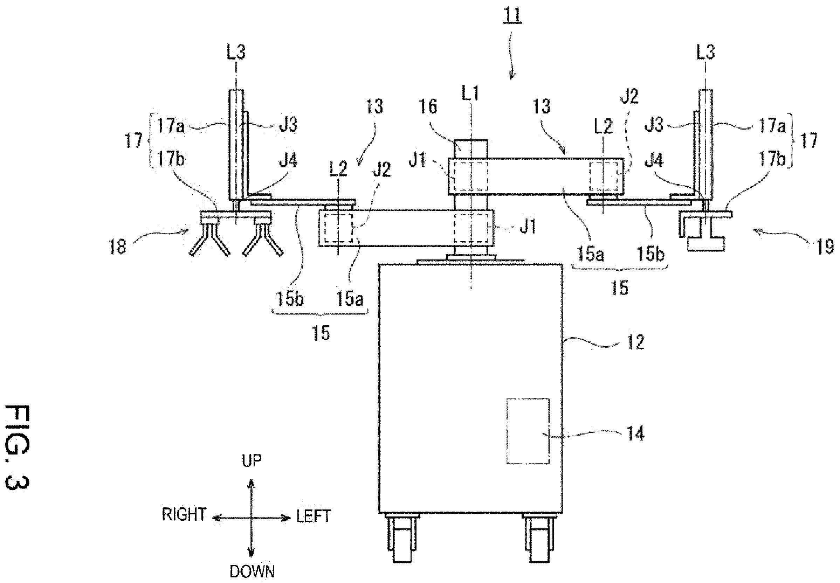

Fig. 3 is a plan view schematically illustrating the entire structure of one example of the robot 11. As illustrated in Fig. 3, the robot 11 includes a base 12 fixed to a carriage, the pair of robotic arms (hereinafter, may simply be referred to as the "arms") 13 supported by the base 12, and a control device 14 accommodated in the base 12. Each arm 13 is a horizontal articulated robotic arm which is movable with respect to the base, and is provided with an arm part 15, a wrist part 17, and a hand part 18 or 19. Note that the right arm 13 and the left arm 13 may have substantially the same structures, except for the hand parts 18 and 19. Moreover, the right arm 13 and the left arm 13 are capable of operating independently from each other or collaboratively with each other.

In this example, each arm part 15 is comprised of a first link 15a and a second link 15b. The first link 15a is coupled to a base shaft 16 fixed to an upper surface of the base 12 via a rotary joint J1. The first link 15a is rotatable on a rotation axis L1 passing through an axial center of the base shaft 16. The second link 15b is coupled to a tip end of the first link 15a via a rotary joint J2. The second link 15b is rotatable on a rotation axis L2 defined at the tip end of the first link 15a.

The wrist part 17 is comprised of an elevating part 17a and a rotary part 17b. The elevating part 17a is coupled to a tip end of the second link 15b via a linear-motion joint J3. The elevating part 17a is capable of ascending and descending with respect to the second link 15b. The rotary part 17b is coupled to a lower end of the elevating part 17a via a rotary joint J4. The rotary part 17b is rotatable on a rotation axis L3 defined at the lower end of the elevating part 17a.

The right hand part 18 and the left hand part 19 are coupled to the rotary parts 17b of the wrist parts 17, respectively. Note that the left hand part 19 corresponds to a "first holding part" of the present disclosure. The right hand part 18 corresponds to a "second holding part" of the present disclosure. The right hand part 18 is provided at a tip end of the right arm 13. The left hand part 19 is provided at a tip end of the left arm 13.

Each arm 13 having the above structure includes the joints J1-J4. The arm 13 is provided, corresponding to the joints J1-J4, with driving servo motors (not illustrated) and encoders (not illustrated) which detect rotational angles of the servo motors, respectively. The rotation axes L1 of the first links 15a of the two arms 13 are located coaxially. The first link 15a of one arm 13 and the first link 15a of the other arm 13 are provided with a height difference therebetween.

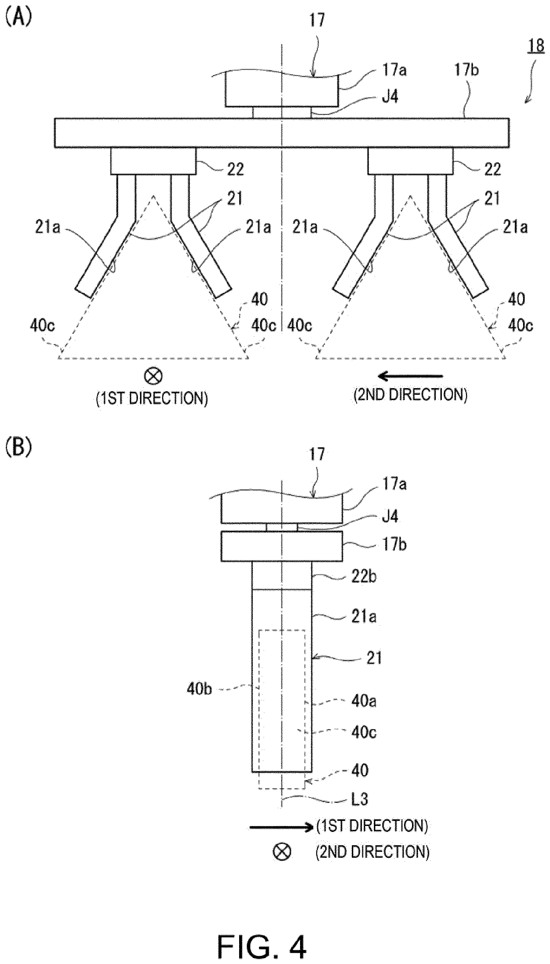

Figs. 4(A) and 4(B) are a front view and a side view illustrating a structure of the right hand part 18 (second holding part) in Fig. 3. In Fig. 4(A), a direction toward the drawing sheet is the first direction. In Fig. 4(B), a direction from the left to the right of the drawing sheet is the first direction. As illustrated in Figs. 4(A) and 4(B), the right hand part 18 is capable of holding two pieces of the foods 40 in the standing state where the front surface 40a faces in the first direction. The right hand part 18 has two sets of a pair of holding members 21. The rotary part 17b of the wrist part 17 extends in the horizontal directions perpendicular to the rotation axis L3 in the front view. Each pair of holding members 21 are disposed at one side and the other side of the rotary part 17b in the horizontal directions.

The each pair of holding members 21 pinches the foods 40 from both sides in the standing state where the front surface 40a faces in the first direction. Each holding member 21 has a contact surface 21a which has a shape conforming to the inclinations of the side surfaces 40c of the food 40, and contacts the food 40. Each holding member 21 has two flat main surfaces, each formed in, for example, a rectangular flat plate shape, and one of the main surfaces is the contact surface 21a which contacts the food 40 held by the holding members 21. The holding member 21 is comprised of, for example, a resin plate or a metal plate. In this embodiment, a triangular rice ball is used as the food 40. Thus, the contact surfaces 21a of the pair of holding members 21 are formed in a mountain shape (inverted V-shape) where the distance therebetween becomes narrower toward the upper ends and wider downwardly.

The pair of holding members 21 are connected with the rotary part 17b of the wrist part 17 via an adjustment member 22. The adjustment member 22 is connected to an actuator (not illustrated) etc. The adjustment member 22 is connected to the upper ends of the pair of holding members 21. The adjustment member 22 moves the upper ends of the pair of holding members 21 linearly to change the mutual distance between the pair of holding members 21. By this adjustment member 22, the pair of holding members 21 is reduced in the mutual distance to pinch and hold one food 40. In this embodiment, although the food 40 is held by a frictional force generated when the contact surfaces 21a of the holding members 21 contact the side surfaces 40c of the food 40, suction port(s) may be provided to the contact surface(s) 21a to hold the food 40 by a suction force.

Note that, in this embodiment, a gap is formed at the upper parts of the left and right holding members 21 when the food 40 is held. Thus, the holding members 21 do not touch the film upper part of the rice ball (40). Normally, in the rice ball wrapped with the film, since the film upper part is made easier to be torn by forming perforations etc. for an easier opening of the film, the above structure will neither accidentally open the food 40, nor damage the food 40.

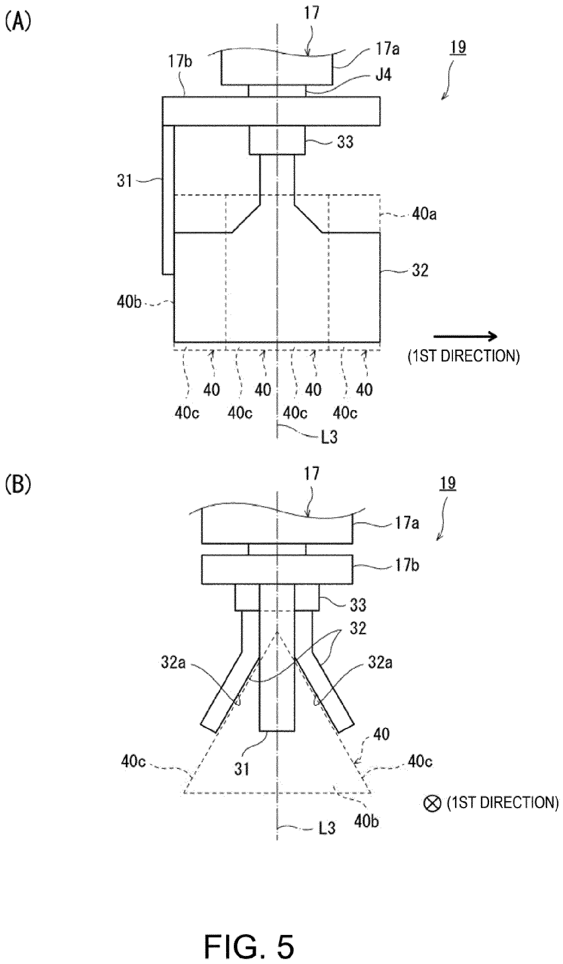

Figs. 5(A) and 5(B) are a front view and a side view illustrating a structure of the left hand part 19 (first holding part) in Fig. 3. In Fig. 5(A), a direction from the left to the right of the drawing sheet is the first direction. In Fig. 5(B), the direction toward the drawing sheet is the first direction. As illustrated in Figs. 5(A) and 5(B), the left hand part 19 is capable of holding the plurality of foods 40 which are lined up in the first direction in the standing state where the front surfaces 40a face in the first direction. The left hand part 19 has a first support member 31 and a pair of holding members 32. The rotary part 17b of the wrist part 17 extends in a direction perpendicular to the rotation axis L3 in the front view. The first support member 31 is provided at one end of the rotary part 17b of the wrist part 17 in the horizontal directions. The first support member 31 is a part which supports the plurality of foods 40 from one side. The first support member 31 supports the food 40 which is located at the tail end when seen in the first direction, from the rear surface 40b of the food 40. Alternatively, the first support member 31 may be provided at the other end of the rotary part 17b of the wrist part 17 in the horizontal directions so as to support the food 40 which is located at the front end when seen in the first direction, from the front surface 40a of the food 40.

The pair of holding members 32 pinch the plurality of foods 40 from both sides in the first direction. The holding members 32 extend throughout the side surfaces 40c of the plurality of foods 40 in the first direction. That is, the holding member 32 has a dimension extending between the front end one of the plurality of lined-up foods 40 and the tail end one. Although in this embodiment the dimension corresponds to the width of the four pieces of the foods 40, the dimension may correspond to the width of five or more pieces of the foods 40.

Each holding member 32 has a contact surface 32a which has a shape conforming to the inclinations of the side surfaces 40c of the food 40, and contacts the food 40. Each holding member 32 has two flat upper and lower main surfaces, each formed in, for example, a rectangular flat plate shape, and the lower main surface is the contact surface 32a which contacts the food 40 held by the holding members 32. Similar to the holding members 21 of the right hand part 18, the contact surfaces 32a of the pair of holding members 32 are formed in an inverted V-shape with the vertex separated and is formed in a mountain shape (inverted V-shape) which spreads downwardly, so that the mutual distance becomes narrower toward the connection. Moreover, similarly, an adjustment member 33 connected to base ends of the pair of holding members 32 reduces the mutual distance therebetween to pinch and hold one food 40.

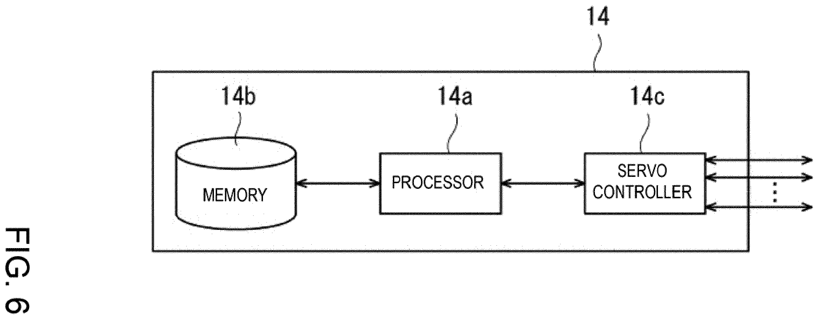

Fig. 6 is a functional block diagram schematically illustrating a configuration of the control device 14 of the robot 11 in Fig. 3. As illustrated in Fig. 6, the control device 14 includes a processor 14a, such as a CPU, a memory 14b, such as a ROM and/or a RAM, and a servo controller 14c. The control device 14 is a robot controller provided with a computer, such as a microcontroller, for example. The control device 14 may be comprised of a single control device 14 which carries out a centralized control. Alternatively, the control device 14 may be comprised of a plurality of control devices 14 which collaboratively carry out a distributed control.

The memory 14b stores information, such as a basic program as the robot controller, various fixed data, etc. The processor 14a controls various operations of the robot 11 by reading and executing software, such as the basic program, stored in the memory 14b. That is, the processor 14a generates a control command of the robot 11, and outputs the command to the servo controller 14c. The servo controller 14c controls driving of the servo motors corresponding to the joints J1-J4 of each arm 13 of the robot 11 based on the control command generated by the processor 14a. The control device 14 corresponds to a "first control part" and/or a "second control part" of the present disclosure.

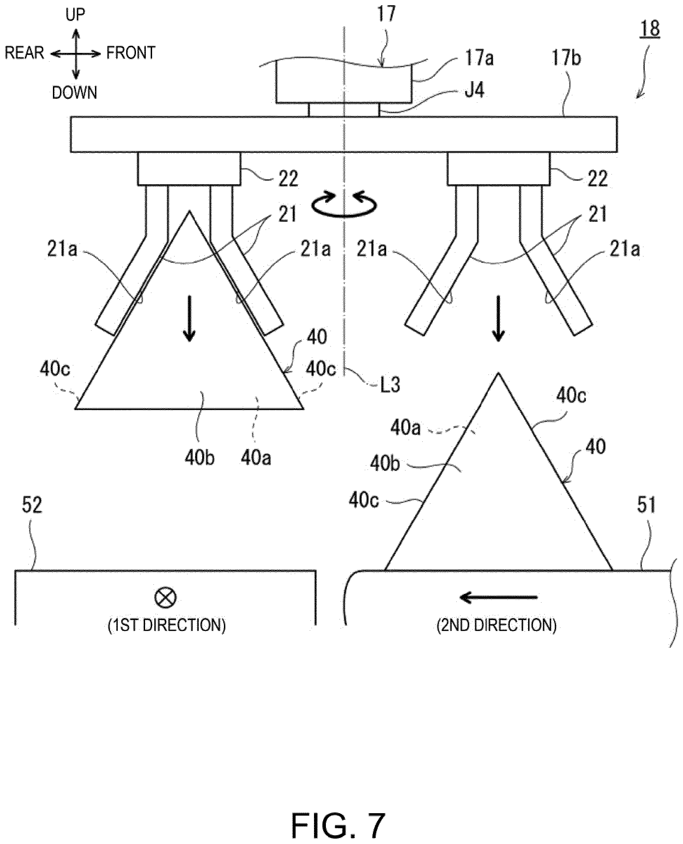

Next, a packing operation of the foods 40 of this embodiment is described with reference to Figs. 7 to 10. First, operation of the right hand part 18 (second holding part) is described using the front view of Fig. 7. In Fig. 7, a direction toward the drawing sheet is the first direction. A direction from the right to the left in the drawing sheet is the second direction. As illustrated in Fig. 7, the control device 14 controls the operation of the right arm 13 to align the position of the rotation axis L3 of the rotary part 17b of the wrist part 17 with a location near a boundary between the first belt conveyor 51 and the second belt conveyor 52. Then, the elevating part 17a of the wrist part 17 is lowered to bring the contact surfaces 21a of the holding members 21 at one side of the rotary part 17b in contact with the side surfaces 40c of the food 40 on the first belt conveyor 51. Then, the pair of holding members 21 provided at one side of the rotary part 17b holds the food 40 in the standing state where the front surface 40a faces in the first direction.

Next, while the food 40 is held by the holding members 21 at one side of the rotary part 17b, the elevating part 17a of the wrist part 17 is lifted to a given height. Then, the rotary part 17b is rotated on the rotation axis L3 defined at the lower end of the elevating part 17a. Then, the elevating part 17a of the wrist part 17 is again lowered, and the holding members 21 at one side of the rotary part 17b places on the second belt conveyor 52 the held food 40 to line up in the first direction in the standing state where the front surface 40a faces in the first direction. The second belt conveyor 52 periodically moves by a distance corresponding to the width of one piece of food 40 each time the food 40 is placed on the belt. That is, the second belt conveyor 52 is set up so that it operates in an interlocked manner with the robot 11. Thus, by operating the right hand part 18, the foods 40 conveyed on the first belt conveyor 51 in the state where they are lined up in the second direction are then conveyed on the second belt conveyor 52 in the state where they are lined up in the first direction.

Moreover, by the holding members 21 at one side of the rotary part 17b, one of the foods 40 on the first belt conveyor 51 is held, and at the same time, another one of the foods 40 held by the holding members 21 at the other side of the rotary part 17b is placed on the second belt conveyor 52. Then, by the holding members 21 at the other side of the rotary part 17b which became empty, one of the foods 40 on the first belt conveyor 51 is again held. Thus, since the right arm 13 simultaneously performs the holding operation and the placing operation of the food 40, the food 40 on the first belt conveyor 51 can efficiently be transferred to the second belt conveyor 52.

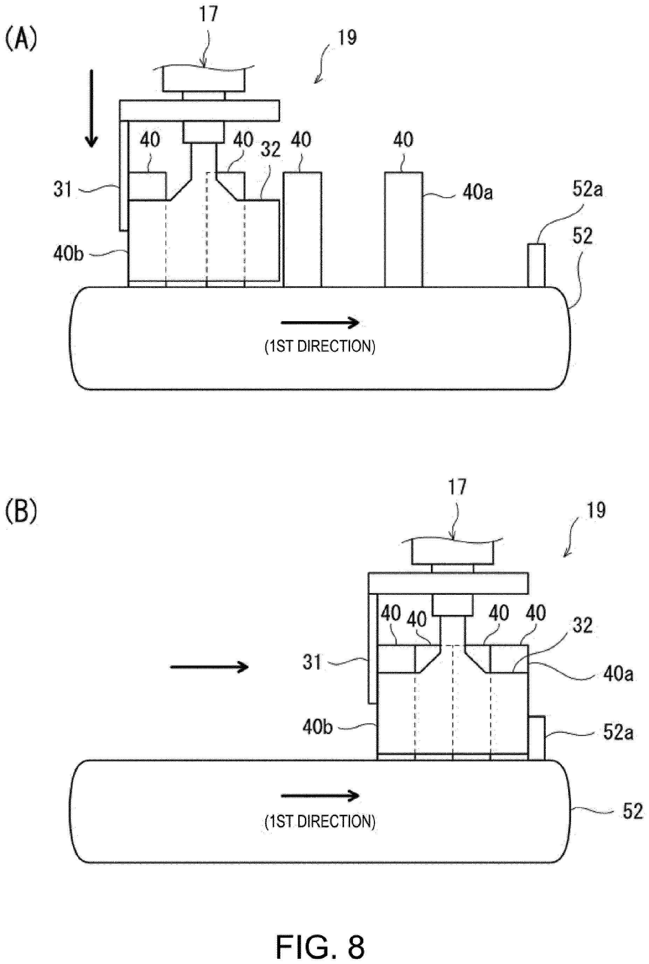

Next, operation of the left hand part 19 (first holding part) is described using front views of Figs. 8(A) and 8(B). In Figs. 8(A) and 8(B), a direction from the left to the right of the drawing sheet is the first direction. As illustrated in Fig. 8(A), the control device 14 first controls the operation of the left arm 13 to align the position of the wrist part 17 with a location on the second belt conveyor 52, and lowers the wrist part 17 (elevating part 17a) to the plurality of foods 40 on the second belt conveyor 52. Then, the first support member 31 supports the food 40 from the rear surface 40b side of the food 40 which is located at the tail end when seen in the first direction.

Next, as illustrated in Fig. 8(B), the control device 14 controls the operation of the left arm 13 to move the pair of holding members 32 in the first direction toward a second support member 52a provided at a downstream end of the second belt conveyor 52. The second support member 52a is located at the front surface 40a side of the food 40 which is located at the front end when seen in the first direction. As illustrated in Fig. 5, since the contact surfaces 32a of the holding members 32 have the shape conforming to the inclinations of the side surfaces 40c of the foods 40, the side surfaces 40c of the foods 40 are lined up in the first direction along the contact surfaces 32a by moving the pair of holding members 32 in the first direction toward the second support member 52a. Further, the food 40 is supported by the second support member 52a, from the front surface 40a of the food 40 which is located at the front end when seen in the first direction. Therefore, gaps between the foods 40 are eliminated, while lining up or aligning both the side surfaces 40c of the four pieces of foods 40 in the first direction.

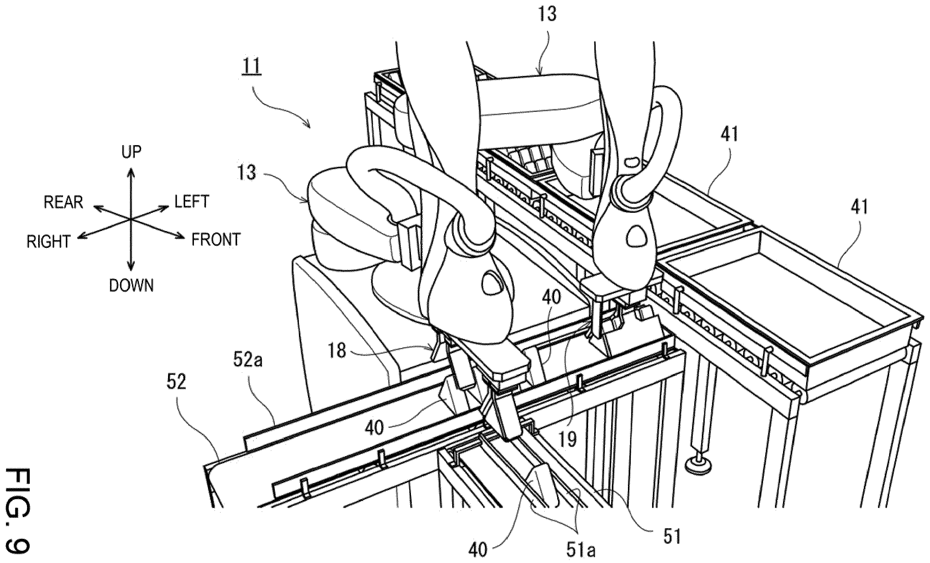

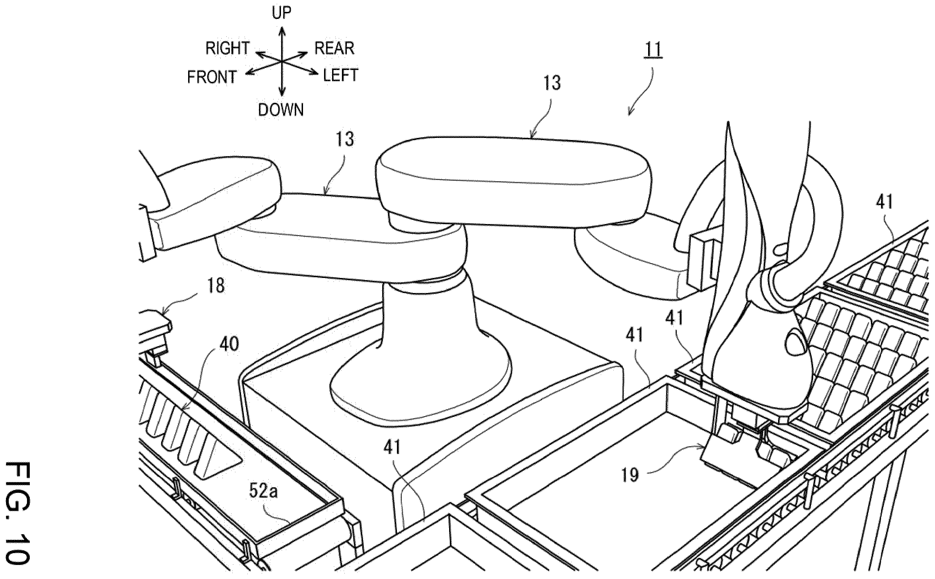

As a result, as illustrated in Fig. 9, the robot 11 changes the conveying direction of the foods 40 by the right hand part 18 provided at the tip end of the right arm 13. On the other hand, the four pieces of foods 40 can securely be held from both sides by the left hand part 19 provided at the tip end of the left arm 13. Then, as illustrated in Fig. 10, the robot 11 can simultaneously pack the four pieces of foods 40 held by the left hand part 19 into the tray 41.

Therefore, according to this embodiment, by controlling the left arm 13 to which the left hand part 19 (first holding part) is provided, the food 40 which is located at the tail end when seen in the first direction is supported by the first support member 31 from the rear surface 40b side of the food 40 (see Fig. 8(A)). In this state, the pair of holding members 32 move in the first direction toward the second support member 52a. The food 40 is supported by the second support member 52a from the front surface 40a of the food 40 located at the front end (see Fig. 8(B)). The four pieces of foods 40 are held while both sides thereof are aligned in the first direction. Thus, since the gaps between the foods 40 are eliminated, the four pieces of foods 40 can securely be held. As a result, the efficiency of the packing work of the foods 40 can be improved within the limited workspace.

Moreover, by controlling the right arm 13 to which the right hand part 18 (second holding part) is provided, the foods 40 are held on the first belt conveyor 51, while the standing state of the foods 40 which are lined up in the second direction in the standing state where the front surfaces 40a face in the first direction is maintained (see Fig. 7). The held foods 40 are lined up in the first direction on the second belt conveyor 52 in the standing state where the front surfaces 40a face in the first direction. Thus, it becomes easier for the left hand part 19 (first holding part) to hold the plurality of foods 40 on the second belt conveyor 52.

Note that the second support member 52a may be formed as a part of a wall surface surrounding the belt of the second belt conveyor 52 (see Fig. 9). Moreover, a pair of support members 51a may be provided on the first belt conveyor 51 in the conveying direction (second direction) so as to be separated from each other with a gap corresponding to the width of the food 40 (see Fig. 10). Therefore, the plurality of foods 40 can be conveyed in the state where the foods 40 are lined up in the second direction in the standing state where the front surfaces of the foods 40 face in the first direction.

### (Second Embodiment)

Hereinafter, a second embodiment is described. The fundamental structure of the holding device 10 for the foods 40 of this embodiment is similar to that of the first embodiment. Below, description of the structures common to the first embodiment is omitted, and different structures will only be described.

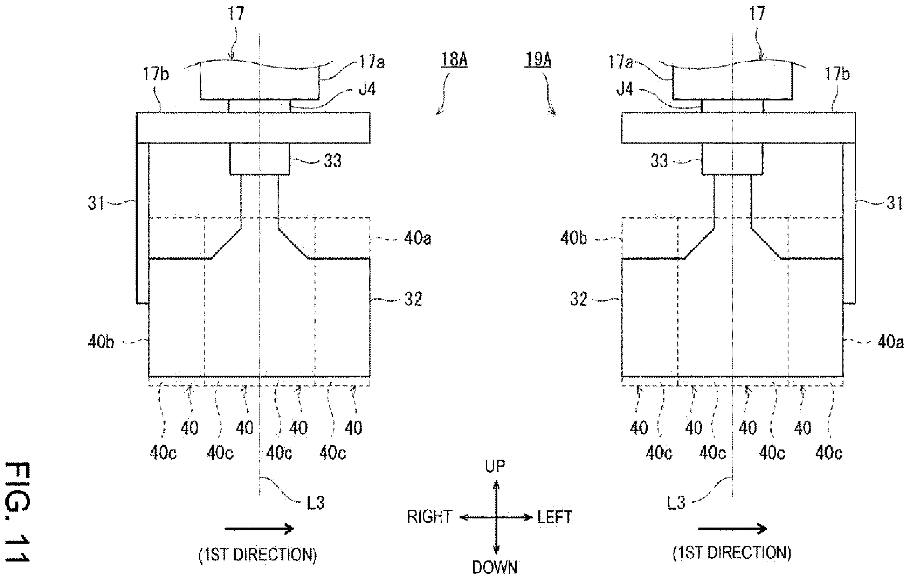

Fig. 11 is a front view illustrating structures of a right hand part (second holding part) and a left hand part (first holding part) according to the second embodiment of the present disclosure. In Fig. 11, an upward direction in the drawing sheet is the first direction. As illustrated in Fig. 11, the right hand part 18A and the left hand part 19B of this embodiment differ from the first embodiment in that the hand parts have symmetrical structures. The right hand part 18A and the left hand part 19A hold the plurality of foods 40 being lined up in the first direction in the standing state where the front surfaces 40a face in the first direction.

The right hand part 18A includes a first support member 31 and a pair of holding members 32. The first support member 31 is a part which is provided at one end of the rotary part 17b of the wrist part 17 in the horizontal directions, and supports the plurality of foods 40 from the side. The first support member 31 supports the foods 40 from the rear surface 40b side of the food 40 which is located at the tail end when seen in the first direction.

The left hand part 19A has a first support member 31 and a pair of holding members 32. The first support member 31 is a part which is provided at one end of the rotary part 17b of the wrist part 17 in the horizontal directions, and supports the plurality of foods 40 from the side. The first support member 31 supports the foods 40 from the front surface 40a side of the food 40 which is located at the front end when seen in the first direction.

In the right hand part 18A and the left hand part 19A, each pair of holding members 32 pinch the plurality of foods 40 from both sides in the first direction. The holding member 32 extends throughout the side surfaces 40c of the plurality of foods 40 in the first direction. That is, the holding member 32 has a dimension extending between one of the plurality of lined-up foods 40 located at the front end and one of the foods 40 located at the tail end. Although in this embodiment the dimension corresponds to the width of four pieces of foods 40, the dimension may correspond to a width of five or more pieces of foods 40.

Note that, since the shape of the side surfaces of the right hand part 18A and the left hand part 19B of this embodiment is the same as the shape illustrated by the side view of Fig. 5(B), description thereof is omitted in this embodiment.

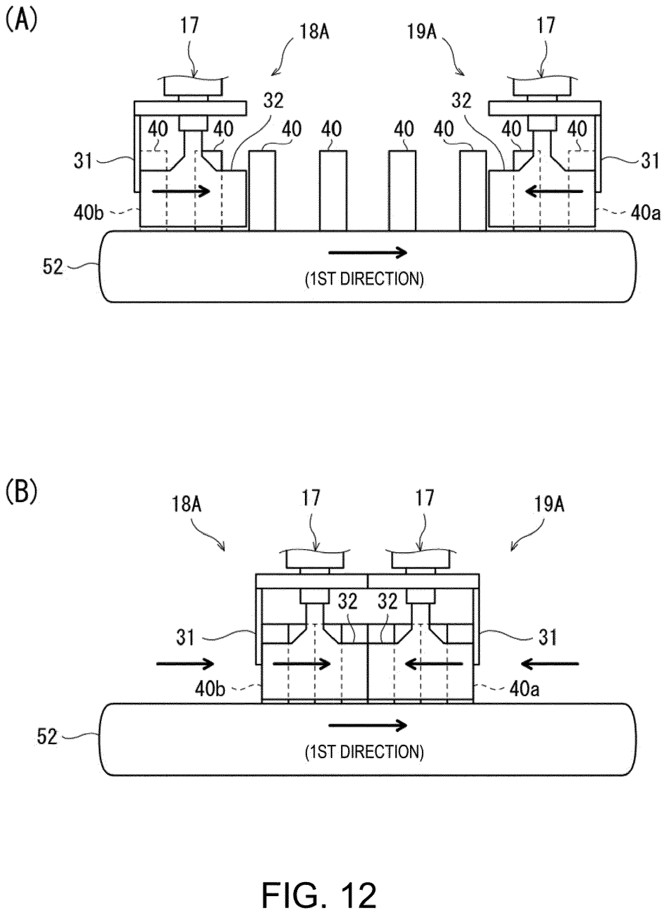

Next, a packing operation of the foods 40 of this embodiment is described with reference to Figs. 12(A), 12(B), 13 and 14. The control device 14 controls operations of the right hand part 18A (first holding part) and the left hand part 19A (first holding part).

In Figs. 12(A) and 12(B), a direction from the left to the right of the drawing sheet is the first direction. As illustrated in Fig. 12(A), the control device 14 first controls the operations of the left and right arms 13 to position the left and right wrist parts 17 at locations on the second belt conveyor 52, and then lower the elevating parts 17a of the left and right wrist parts 17 to eight pieces of foods 40 on the second belt conveyor 52. Then, the first support member 31 of the right hand part 18A supports the foods 40 from the rear surface 40b side of the food 40 which is located at the tail end when seen in the first direction, and the first support member 31 of the left hand part 19A supports the foods 40 from the front surface 40a of the food 40 which is located at the front end when seen in the first direction.

Next, as illustrated in Fig. 12(B), the pair of holding members 32 of the right hand part 18A are moved in the first direction toward the first support member 31 of the left hand part 19A, and a pair of holding members 32 of the left hand part 19A are moved in the first direction toward the first support member 31 of the right hand part 18A.

The shape of the side surfaces of the right hand part 18A and the left hand part 19B of this embodiment is similar to the side surface shape of the left hand part 19 in Fig. 5(B). That is, since the contact surfaces 32a of the holding members 32 have the shape conforming to the inclinations of the side surfaces 40c of the foods 40, the side surfaces 40c of the eight pieces of foods 40 are aligned in the first direction along the contact surfaces 32a by moving the pairs of holding members 32 of the right hand part 18A and the left hand part 19A in parallel to the first direction.

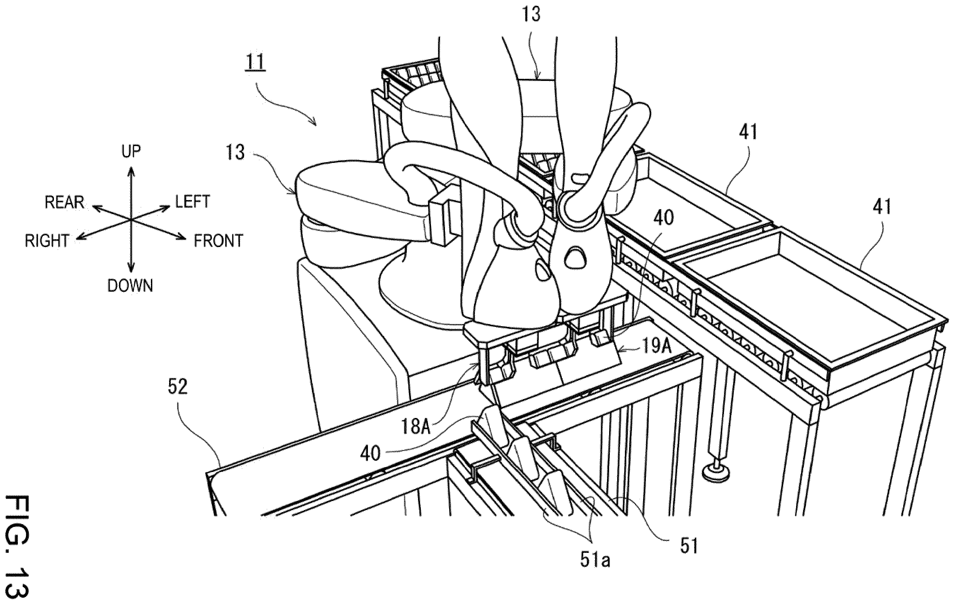

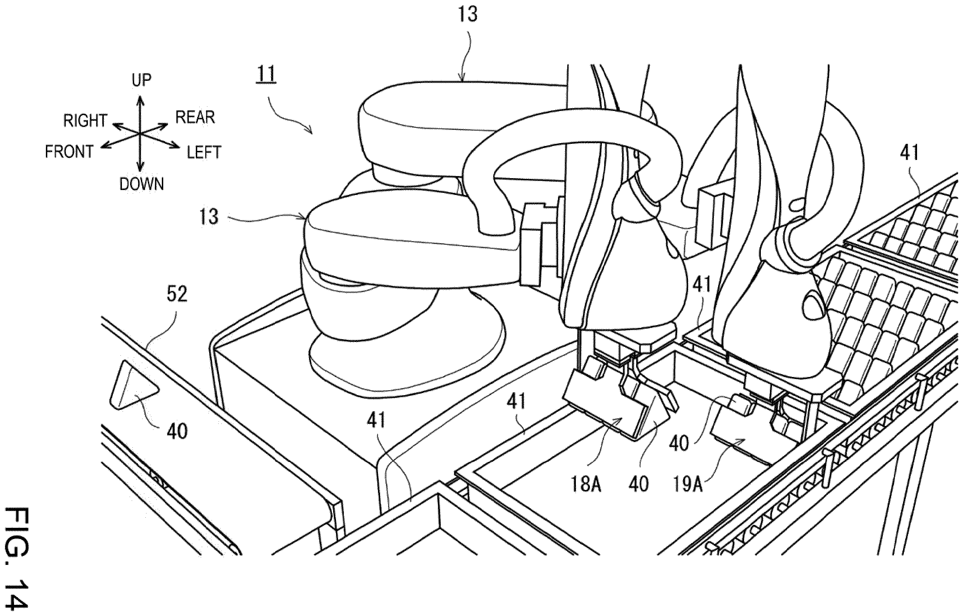

As a result, as illustrated in Fig. 13, the robot 11 can hold the eight pieces of foods 40 which are aligned in the first direction (conveying direction of the second belt conveyor 52) from both sides by the right hand part 18A and the left hand part 19A which are provided at the tip ends of the left and right arms 13. Thus, both sides of the eight pieces of foods 40 can be aligned in the first direction, while both ends of the foods 40 are supported. It becomes easier to collectively hold a larger number of foods 40, compared with the first embodiment. Then, as illustrated in Fig. 14, the robot 11 can simultaneously pack the eight pieces of foods 40 held by the right hand part 18A and the left hand part 19A into the tray 41. Therefore, the increase in efficiency of the packing work of the foods 40 can be achieved.

### (Other Embodiments)

Note that, although in the above embodiments the left hand part 19 or the left and right hand part 18A and 19A have the structure to collectively hold the four pieces of foods 40, they may hold two pieces or three pieces of foods 40 by changing the length of the holding members 21 and 32 in the first direction. Moreover, the hand parts may hold five or more pieces of foods 40.

Note that, although in the above embodiments the holding device 10 for the foods 40 is used for the packing work of the plurality of foods 40 into the tray 41, the work may be other works, which require the holding of the plurality of foods 40.

### (Modifications)

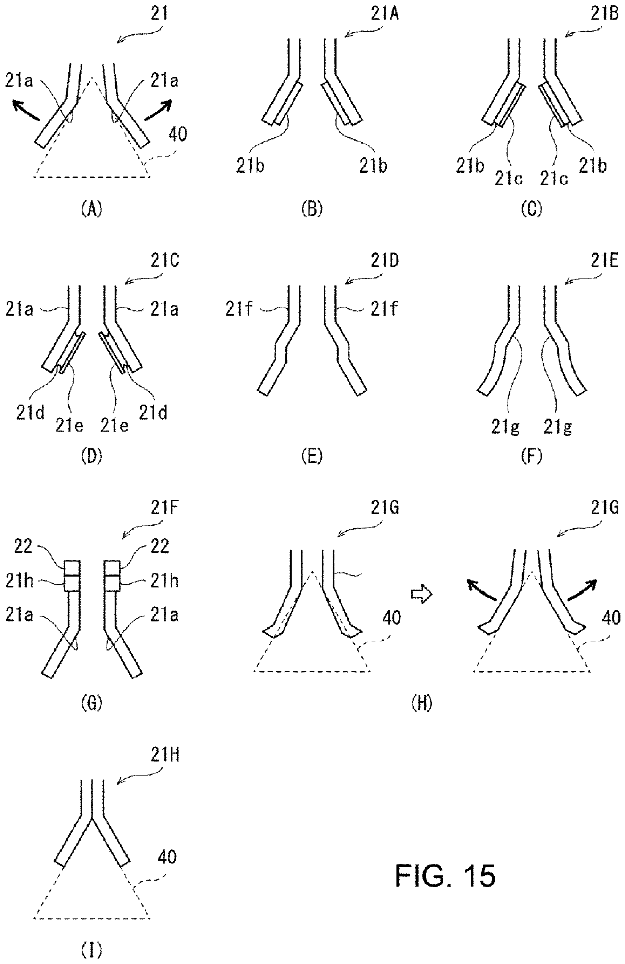

In the holding members 21 (e.g., refer to Fig. 7) of the above embodiments, a relative height relation between the foods 40 and the holding members 21 may vary when holding the foods 40. If the position of the holding members 21 varies upward with respect to the foods 40, and this may cause a gap between the foods 40 and the holding members 21 when the left and right holding members 21 are closed. On the other hand, if the position of the holding members 21 varies downward with respect to the foods 40, the gap between the foods 40 and the holding members 21 becomes too narrow, which may cause the holding members 21 to crush the foods 40. In this regard, by providing elasticity between a driving source of the holding members 21 (corresponding to the adjustment member 22 of Fig. 4) and the contact surfaces 21a of the holding members 21, the above influences by the gap may be absorbed. Here, as illustrated in Fig. 15(A), there is a problem that tip end sides (below) of the left and right holding members 21 open, and only the upper parts of the foods 40 are locally pinched.

Therefore, the contact surfaces 21a of the holding members 21 may be constructed so as to be elastically deformable. Thus, since the contact surfaces 21a which contact the foods 40 is elastically deformed, the foods 40 are easier to be held. Below, Figs. 15(B) to 15(I) illustrate modifications of the holding members.

Fig. 15(B) illustrates a case where contact surfaces 21b of holding members 21A are made of shock-absorbing material, such as sponge. Since the sponge has elasticity, the holding members 21A itself does not need to be deformed. Since the sponge entirely conforms to the contour of the foods 40, the problem of Fig. 15(A) can be solved.

In holding members 21B of Fig. 15(C), sheet members with a higher wear resistance (sand abrasive method) than the shock absorbers (21b) are provided on the surfaces of the shock absorbers (21b) such as the sponge as the contact surfaces 21c. Thus, adhesion of pieces of the sponge to the foods 40 can be prevented.

Alternatively, holding members 21C of Fig. 15(D) are provided with retainer plates as the contact surfaces 21e via elastic members 21d (rubber, coil springs, flat springs, etc.).

Holding members 21D of Fig. 15(E) are formed so that lower parts thereof are narrower than upper parts in order to address the problem of Fig. 15(A). Thus, even if the holding members are deformed as illustrated in Fig. 15(A), they can hold rice balls at location near the center of the rice balls in the height direction.

Holding members 21E of Fig. 15(F) have the same concept as Fig. 15(E). Contact surfaces 21g of the holding members 21E are curved (an arc shape). Since tangents of the contact surfaces 21g become more vertical, a rate of the frictional forces of the holding members 21E contributing to the lifting force increases. Moreover, since the lower end parts of the holding members 21E are separated from the rice balls, a trouble that ends of the holding members 21E stab the rice balls can be avoided.

Fig. 15(G) illustrates another example of holding member (21F) in which elastic members 21h are provided between the adjustment member (holding part driving source) 22 and the contact surfaces 21a of the holding members 21F.

Holding members 21G of Fig. 15(H) are formed under an assumption of a deformation as illustrated in Fig. 15(A), and an angle formed by the left and right holding members 21G becomes smaller than the vertex angle of the rice balls when not holding the rice balls. When the rice balls are held, the left and right holding members 21G conform to the contour of the rice balls by a reaction force from the rice balls. The holding members are desirable to be formed so that lower end parts thereof are separated from the rice balls so that the lower end parts of the holding members do not stab the rice balls. The right figure of Fig. 15(H) illustrates a state where the rice balls are held by the holding members 21G.

Holding members 21H of Fig. 15(I) do not have gaps in upper parts of the left and right holding members 21H when holding the rice balls. The rice ball can be held more securely by pinching the film upper part of the rice ball by the upper part of the holding members 21H.

Although in the above embodiments, the first belt conveyor 51 is disposed at a front right location of the robot 11 and the third belt conveyor 53 is disposed at the left side of the robot 11, the layout may be interchanged in the left-and-right directions. For example, the first belt conveyor 51 may be disposed at a forward left location of the robot 11, the third belt conveyor 53 may be disposed at the right side of the robot 11, and the second belt conveyor 52 may transfer the food 40 from a front left location to a front right location of the robot 11. Note that in this case, the left and right hand parts 18 and 19 of the robot 11 of the first embodiment are interchanged in the left-and-right directions.

It is apparent for a person skilled in the art that many improvements and other embodiments of the present disclosure are possible from the above description. Therefore, the above description is to be interpreted only as illustration, and it is provided in order to teach a person skilled in the art the best mode that implements the present disclosure. The details of the structures and/or the functions may substantially be changed without departing from the spirit of the present disclosure.

### INDUSTRIAL APPLICABILITY

The present disclosure is useful for the holding device for foods when packing the foods into the tray.

### DESCRIPTION OF REFERENCE CHARACTERS

- 10: Holding Device
- 11: Robot
- 13: Arm
- 17: Wrist Part
- 18: Right Hand (Second Holding Part)
- 19: Left Hand (First Holding Part)
- 31: First Support Member
- 21, 32: Holding Member
- 22: Adjustment Member
- 40: Food
- 41: Tray
- 51: First Belt Conveyor
- 52: Second Belt Conveyor
- 52a: Second Support Member
- 53: Third Belt Conveyor

## Claims

1. A holding device for foods configured to hold the foods that are self-standable and have a front surface and a rear surface parallel to the front surface, the device comprising:
a first holding part configured to hold the foods lined up in a first direction in a standing state where the front surfaces face in the first direction, the first holding part including a first support member configured to support the foods at one of the front surface of the food located at a front end when seen in the first direction and the rear surface of the food located at a tail end when seen in the first direction, and a pair of holding members configured to pinch the foods from both sides in the first direction.

2. The holding device for foods of claim 1, further comprising:
a base;
a first robotic arm movable with respect to the base and having the first holding part at a tip end thereof; and
a first control part configured to control the first robotic arm, the first control part controlling the first robotic arm to:
cause the first support member to support the foods at one of the front surface of the food located at the front end when seen in the first direction and the rear surface of the food located at the tail end;
move the pair of holding members in the first direction so that the both sides of the foods are aligned in the first direction; and
cause the pair of holding members to pinch from both sides the foods aligned in the first direction.

3. The holding device for foods of claim 2, further comprising a second support member provided at one of a front surface side of the food located at the front end when seen in the first direction and a rear surface side of the food located at the tail end,
wherein the first control part controlling the first robotic arm to:
cause the first support member to support the foods at one of the rear surface of the food located at the tail end when seen in the first direction and the front surface of the food located at the front end;
move the pair of holding members toward the second support member in the first direction so that the both sides of the foods are aligned in the first direction;
cause the second support member to support the food at one of the front surface of the food located at the front end when seen in the first direction and the rear surface of the food located at the tail end; and
cause the pair of holding members to pinch from the both sides the foods aligned in the first direction.

4. The holding device for foods of claim 3, further comprising:
a second holding part configured to hold the foods lined up in a second direction perpendicular to the first direction in the standing state where the front surfaces face in the first direction;
a second robotic arm movable with respect to the base and having the second holding part at a tip end thereof; and
a second control part configured to control the second robotic arm, the second control part controlling the second robotic arm to cause the second holding part to hold the foods in the standing state where the front surfaces face in the first direction, and change the position of the foods held so that the foods are lined up in the first direction in the standing state where the front surfaces of the foods face in the first direction.

5. The holding device for foods of claim 2, further comprising:
a second robotic arm movable with respect to the base and having the first holding part at a tip end thereof; and
a second control part configured to control the second robotic arm,
wherein the first and second control parts controlling the first and second robotic arms to:
cause the first support member of the first robotic arm to support the foods at the rear surface of the food located at the tail end when seen in the first direction;
cause the first support member of the second robotic arm to support the foods at the front surface of the food located at the front end when seen in the first direction;
move the pair of holding members of the first robotic arm toward the first support member of the second robotic arm in the first direction so that both sides of the foods are aligned in the first direction;
move the pair of holding members of the second robotic arm toward the first support member of the first robotic arm in the first direction so that both sides of the foods are aligned in the first direction; and
cause the pairs of holding members of the first and second robotic arms to pinch from both sides the foods aligned in the first direction.

6. The holding device for foods of any one of claims 1 to 5, wherein each of the holding members has a contact surface of a shape conforming to an inclination of a side surface of the foods and configured to contact the foods, the contact surface being elastically deformable.
